## Europäisches Patentamt
## European Patent Office
## Office européen des brevets

(11) Veröffentlichungsnummer: **0 202 581**
A2

(12) **EUROPÄISCHE PATENTANMELDUNG**

(21) Anmeldenummer: 86106475.6

(22) Anmeldetag: 13.05.86

(51) Int. Cl.⁴: **F 16 D 65/78**
**F 16 D 65/853**

(30) Priorität: 24.05.85 DE 3518795

(43) Veröffentlichungstag der Anmeldung:
26.11.86 Patentblatt 86/48

(84) Benannte Vertragsstaaten:
DE FR GB IT

(71) Anmelder: **LUCAS INDUSTRIES public limited company**
**Great King Street**
**Birmingham, B19 2XF West Midlands(GB)**

(72) Erfinder: **Steuer, Klaus**
**Mozartstrasse 3**
**D-5401 Urmitz/Rhein(DE)**

(72) Erfinder: **Mohr, Kurt-Friedrich**
**Im Hof 3**
**D-5401 Halsenbach-Ehr(DE)**

(72) Erfinder: **Rotter, Roman**
**Rothenbacher Strasse 4**
**D-5439 Kaden/Ww(DE)**

(74) Vertreter: **Wuesthoff, Franz, Dr.-Ing. et al,**
**Patentanwälte Wuesthoff -v. Pechmann-Behrens-Goetz**
**Schweigerstrasse 2**
**D-8000 München 90(DE)**

(54) Vorrichtung zum Kühlen der Hydraulik-Flüssigkeit einer Bremsanlage.

(57) Eine Vorrichtung zum Kühlen der Hydraulik-Flüssigkeit in einer hydraulischen Bremsanlage (10) ist mit einem Wärmetauscher (46) versehen, welcher vom Wasser aus dem Reservoir (52) der Scheiben-Waschanlage des Fahrzeuges durchströmt wird.

EP 0 202 581 A2

PATENTANWÄLTE

STHOFF - v. PECHMANN - BEHRENS - GOETZ

EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING. DIPL.-WIRTSCH.-ING. RUPERT GOETZ
DIPL.-PHYS. DR. AXEL VON HELLFELD

D-8000 MÜNCHEN 90
SCHWEIGERSTRASSE 2

TELEFON: (089) 66 20 51
TELEGRAMM: PROTECTPATENT
TELEX: 524 070
TELEFAX: (089) 66 39 36 (III)

Lucas Ind. p.l.c.

EP-60 226

**0202581**

— 1 —

## Vorrichtung zum Kühlen der Hydraulik-Flüssigkeit einer Bremsanlage

Die Erfindung betrifft eine Vorrichtung zum Kühlen der Hydraulik-Flüssigkeit in einer hydraulischen Bremsanlage, bei der mittels eines Hauptbremszylinders ein Kolben einer KolbenZylinder-Anordnung mit der Hydraulik-Flüssigkeit beaufschlagt wird.

Moderne Kraftfahrzeuge erreichen aufgrund ihrer strömungsgünstigen Formgebung relativ hohe Spitzengeschwindigkeiten, so daß bei einer Abbremsung des Fahrzeuges eine entsprechend hohe kinetische Energie in Reibungswärme umgesetzt wird. Die sehr gute strömungsgünstige Formgebung hat dabei den Nachteil, daß auch der bremsende Strömungswiderstand reduziert ist, so daß die thermische Belastung der Bremsen im Vergleich zu weniger strömungsgünstigen Karosserien noch erhöht wird.

Auch geht mit der strömungsgünstigeren Formgebung der Karosserien zumeist eine Verminderung der Luftströmung um die Bremsen einher, so daß die Wärmeabfuhr von der Bremse und den Zuleitungen reduziert ist.

Bekanntlich muß zur Vermeidung einer Beeinträchtigung der Bremsfunktion eine zu hohe thermische Belastung der Bremsflüssigkeit vermieden werden. Insbesondere alte, einen relativ hohen Wasseranteil aufweisende Bremsflüssigkeit entwickelt bei zu hohen Temperaturen Dampfblasen, welche zu einer nachteiligen Kompressibilität der Hydraulik-Flüssigkeit führen.

Aus der DE-OS 15 30 681 ist eine hydraulische Fahrzeugbremse bekannt, bei der Bremsflüssigkeit innerhalb der Bremsanlage umgepumpt wird, um erhitzte Hydraulik-Flüssigkeit abzuführen und durch kühlere Flüssigkeit zu ersetzen. Bei dem dort vorgesehenen Verfahren wird jedoch die Pumpe einem sehr hohen Bremsdruck ausgesetzt, was eine entsprechend aufwendige und teuere Konstruktion der Pumpe voraussetzt, da Bremsdrücke von bis zu 200 bar auftreten können.

Aus der DE-PS 31 43 267 und der DE-OS 33 36 114 sind hydraulische Bremsanlagen für Kraftfahrzeuge bekannt, bei denen die Bremsflüssigkeit nur dann umgepumpt wird, wenn die Bremse unbetätigt ist. Bei betätigter Bremse erfolgt keine Förderung der Bremsflüssigkeit zur Kühlung. Dabei wird der Umstand ausgenutzt, daß eine Flüssigkeit erst dann zu sieden beginnt, wenn bei einer gegebenen Temperatur ihr Dampfdruck größer ist als der Druck, unter dem die Flüssigkeit steht. Während des Bremsens steht die Hydraulik-Flüssigkeit unter extrem hohem Druck, so daß auch die Siedetemperatur entsprechend hoch ist. Bei der DE-PS 31 43 267 ist deshalb eine Umpumpung der Bremsflüssigkeit zur Kühlung nur bei unbelasteter Bremse vorgesehen. Die bekannte Bremsanlage kommt mit einer relativ einfachen und kostengünstigen Pumpe aus, doch werden zwei Hauptbremszylinder benötigt oder aber ein Hauptbremszylinder mit mehr als zwei Kammern. Derartige Bremsanlagen sind deshalb relativ sperrig und aufwendig in der Herstellung. Überdies sind zusätzliche dynamische Dichtungen gegen den Atmosphärendruck erforderlich, welche eine zusätzliche Störungsquelle bilden.

Der Erfindung liegt die Aufgabe zugrunde, eine wirksame, kostengünstige und wenig störanfällige Vorrichtung zum Kühlen der Hydraulik-Flüssigkeit in einer hydraulischen Bremsanlage zu schaffen.

Die erfindungsgemäße Lösung dieser Aufgabe ist mit ihren Ausgestaltungen in den Patentansprüchen gekennzeichnet.

Gemäß der Erfindung wird also die Hydraulik-Flüssigkeit der
Bremsanlage mittels eines Wärmetauschers gekühlt. Der Wärmetauscher ist bevorzugt als wasserdurchströmte Schleife ausgebildet, wobei sich das Wasser der Scheibenwaschanlage des Fahrzeuges besonders eignet.

Die Verwendung des Wassers der Scheibenwaschanlage hat den besonderen Vorteil, daß mit erhitztem Wasser auch die Reinigungswirkung beim Scheibenwaschen erhöht wird.

Die erfindungsgemäße Vorrichtung eignet sich insbesondere für
eine Scheibenbremsanlage, da der Wärmetauscher im Zylinder der
Kolben-Zylinder-Anordnung angeordnet werden kann, welche in bekannter Weise die Reibflächen der Scheiben-Bremsanlage beaufschlagt.

Eine besonders raumsparende Anordnung der erfindungsgemäßen
Kühlvorrichtung wird dann erreicht, wenn der Wärmetauscher als
Kühlschleife in einer Ausnehmung im Kolben der Kolben-Zylinder-
Anordnung der Hydraulik-Bremse angeordnet ist.

Auch ist von Vorteil, daß die Kühlschleife nur statisch gegen
den Bremsdruck abgedichtet werden muß.

Weiter vorteilhafte Ausgestaltungen der Erfindung sind in den
übrigen Unteransprüchen beschrieben.

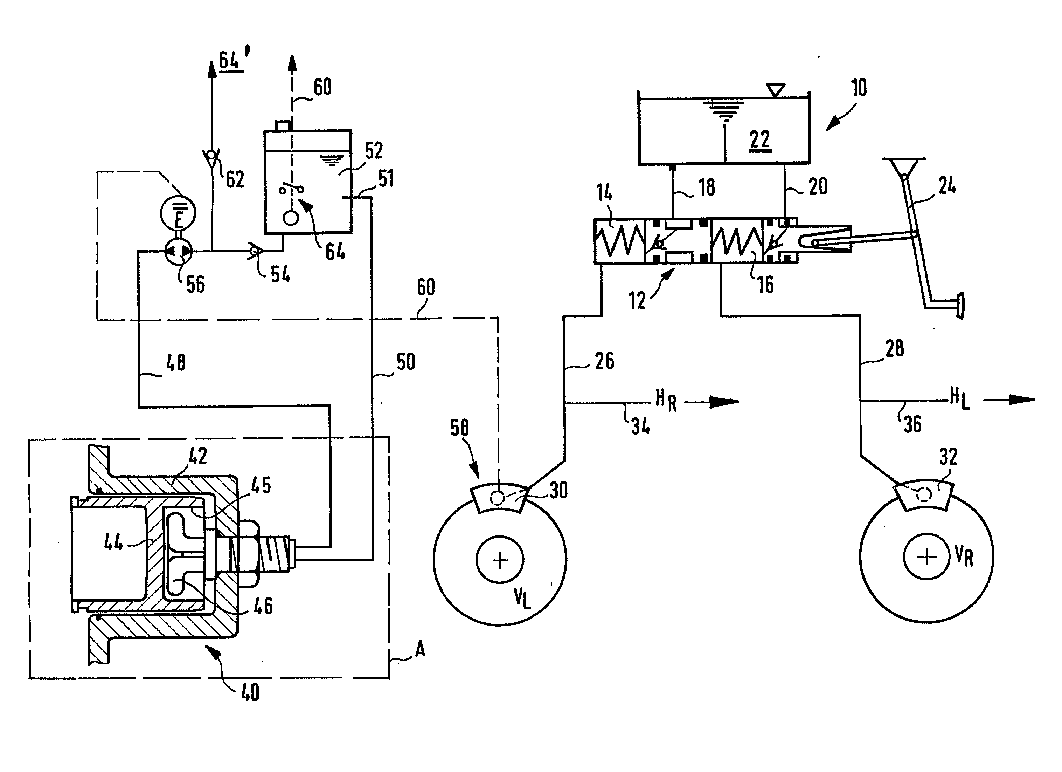

Ein Ausführungsbeispiel der Erfindung wird anhand der Zeichnung
näher erläutert, welche schematisch eine Hydraulik-Bremsanlage
sowie eine vergrößerte Einzelansicht (Bildausschnitt A) zeigt.

Die hydraulische Bremsanlage 10 weist in bekannter Weise einen
Tandem-Hauptbremszylinder 12 mit zwei Druckkammern 14, 16 auf,
welche über Ausgleichsleitungen 18, 20 mit einem Ausgleichsbe-

0202581

60226

hälter 22 für Hydraulik-Flüssigkeit verbunden sind. Der Hauptbremszylinder 12 wird durch das Bremspedal 24 beaufschlagt.

In bekannter Weise führen Leitungen 26, 28 für die Hydraulik-
Flüssigkeit zu den einzelnen Radbremsen 30, 32. In der Zeichnung sind schematisch nur die beiden Vorderräder $V_L$ und $V_R$ angedeutet. Abzweigungen 34, 36 der Hydraulik-Flüssigkeitsleitungen 26 bzw. 28 führen zu den Hinterrädern $H_R$ und $H_L$.

Die Bremsanlage ist im dargestellten Ausführungsbeispiel eine
Scheibenbremse, bei der der Kolben der Kolben-Zylinder-Anordnung zur Aufnahme des Wärmetauschers modifiziert ist.

In der Figur ist im Ausschnitt A die Kolben-Zylinder-Anordnung
40 der Scheibenbremsen 30 bzw. 32 schematisch vergrößert dargestellt. Der Ausschnitt A bildet also ein Detail der beiden
Bremsen 30, 32.

Im Zylinder 42 der Kolben-Zylinder-Anordnung 40 wird der Kolben
44 in der Figur von rechts mit Hydraulik-Flüssigkeit beaufschlagt, um die (nicht gezeigten) Reibplatten der Scheibenbremse auf die Bremsscheibe (nicht gezeigt) zu drücken.

Der Kolben 44 ist etwa H-förmig ausgestaltet, wobei eine Ausnehmung 45 auf der druckbeaufschlagten Seite gebildet ist, in
welcher der Wärmetauscher 46 angeordnet ist. In der Ausnehmung
45 befindliche Hydraulik-Flüssigkeit (welche über die Zuleitungen 26, 28 in den Zylinder 42 eingedrückt ist) wird durch
den Wärmetauscher 46 gekühlt.

Der Wärmetauscher 46 liegt in einem geschlossenen Kreislauf,
der aus den Zu- bzw. Ableitungen 48 bzw. 50 und dem Reservoir
52 der Scheiben-Waschanlage des Fahrzeuges gebildet ist. Zur
Zirkulation des Kühl-Wassers durch den Wärmetauscher 46 dient
die Pumpe 56, welche sowieso in der Scheiben-Waschanlage vorhanden ist. Ein Rückschlagventil 54 verhindert eine Strömung in nicht erwünschter Richtung. Die Pumpe 56 für den Kühlmittelkreislauf wird über einen oder mehrere Thermofühler 58 gesteuert, welche an den Radbremsen 30, 32 angeordnet sind.

Damit der Wasserstand im Reservoir 52 der Scheiben-Waschanlage nicht unter ein gegebenes, für den Kühlwasserkreislauf 52, 48, 46, 50 erforderliches Niveau abfällt, ist eine Füllhöhenanzeige 64 im Reservoir 52 vorgesehen. Sobald der Wasserstand im Reservoir 52 unter ein vorgegebenes Niveau abfällt, erzeugt die Anzeige 64 ein entsprechendes Signal. Mittels des Thermofühlers 58 wird die Pumpe 56 dann in Betrieb gesetzt, wenn die Temperatur der Hydraulik-Flüssigkeit in der Kolben-Zylinder-Anordnung 40 einen vorgegebenen Wert überschreitet. Stattdessen oder zusätzlich kann auch ein Zeitschalter vorgesehen sein, der die Pumpe schaltet, wenn das Bremspedal über einen bestimmten Zeitraum von z.B. 10 sek. betätigt wurde.

Die Kombination der Bremsflüssigkeitskühlung mit der Scheiben-Waschanlage hat insbesondere den Vorteil, daß das Wasser der Waschanlage zur Verbesserung der Reinigungswirkung erhitzt werden kann. Bei Ansteuerung der Pumpe 56 durch den Thermofühler 58 zieht die Pumpe über das Rückschlagventil 54 Wasser aus dem Reservoir 52 und drückt es über die Zuleitung 6 durch den Wärmetauscher 46 und die Rückleitung 50 zurück in das Reservoir 52. Wird die Pumpe 56 über den Scheibenwaschhebel vom Inneren des Fahrzeuges aus betätigt, so saugt sie über den höher gelegenen Anschluß 51 der Leitung 50 Wasser durch den Wärmetauscher 46, wobei das Wasser aufgeheizt wird, und drückt es am Rückschlagventil 62 vorbei zur Scheibenwaschdüse, welche durch das Bezugszeichen 64 angedeutet ist. Durch den höherliegenden Anschluß 51 ist sichergestellt, daß ein gewisser Mindestvorrat an Wasser im Reservoir 52 verbleibt, welcher nicht als Waschwasser verbraucht werden kann, um eine Kühlung der Hydraulik-Flüssigkeiten sicherzustellen.

2064

WUESTHOFF - v. PECHMANN - BEHRENS - GOETZ

EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING. DIPL.-WIRTSCH.-ING. RUPERT GOETZ
DIPL.-PHYS. DR. AXEL VON HELLFELD

D-8000 MÜNCHEN 90
SCHWEIGERSTRASSE 2

TELEFON: (089) 66 20 51
TELEGRAMM: PROTECTPATENT
TELEX: 524 070
TELEFAX: (089) 66 39 36 (III)

Lucas Ind. p.l.c.

EP-60 226

P a t e n t a n s p r ü c h e :

1. Vorrichtung zum Kühlen der Hydraulik-Flüssigkeit in einer hydraulischen Bremsanlage, bei der mittels eines Hauptbremszylinders (16) ein Kolben (44) einer Kolben-Zylinder-Anordnung (40) mit der Hydraulik-Flüssigkeit beaufschlagt wird,
d a d u r c h   g e k e n n z e i c h n e t ,
daß der Wärmetauscher (46) im Zylinder (42) der Kolben-Zylinder-Anordnung (40) angeordnet ist.

2. Vorrichtung nach Anspruch 1,
d a d u r c h   g e k e n n z e i c h n e t ,
daß der Wärmetauscher (46) als wasserdurchströmte Schleife ausgebildet ist.

3. Vorrichtung nach einem der Ansprüche 1 oder 2,
d a d u r c h   g e k e n n z e i c h n e t ,
daß der Wärmetauscher (46) vom Wasser aus dem Reservoir (52) der Scheibenwaschanlage des Fahrzeuges durchströmt ist.

4. Vorrichtung nach einem der Ansprüche 2 oder 3,
d a d u r c h   g e k e n n z e i c h n e t ,
daß der Wärmetauscher (46) als Kühlschleife in einer Ausnehmung (45) im Kolben (44) der Kolben-Zylinder-Anordnung (40) angeordnet ist.

5.      Vorrichtung nach einem der Ansprüche 3 oder 4,
dadurch gekennzeichnet,
daß in der Leitung (48) zwischen dem Reservoir (52) der Scheiben-Waschanlage und dem Wärmetauscher (46) ein Rückschlagventil
(54) vorgesehen ist.

6.      Vorrichtung nach einem der Ansprüche 3 bis 5,
dadurch gekennzeichnet,
daß die Pumpe (56) der Scheiben-Waschanlage zur Förderung des
den Wärmetauscher (46) durchströmenden Wassers eingesetzt ist.

7.      Vorrichtung nach Anspruch 6,
dadurch gekennzeichnet,
daß die Pumpe (56) durch einen Thermofühler (58) gesteuert ist.

8.      Vorrichtung nach einem der Ansprüche 3 bis 7,
dadurch gekennzeichnet,
daß im Reservoir (52) der Scheiben-Waschanlage eine Füllhöhenanzeige (64) vorgesehen ist.

9.      Vorrichtung nach einem der Ansprüche 3 bis 8,
dadurch gekennzeichnet,
daß eine Zuleitung (51) zum Reservoir (52) der Scheiben-Waschanlage auf einem höheren Niveau in das Reservoir mündet als eine
andere Leitung (48).

2064

Lucas Ind... 0202581
EP-60 226